# EUROPÄISCHE PATENTSCHRIFT

(11) **EP 0 721 523 B1**
(45) Veröffentlichungstag und Bekanntmachung des Hinweises auf die Patenterteilung: **28.05.1997**
(21) Anmeldenummer: 94928374.1
(22) Anmeldetag: 19.09.1994
(51) Int. Cl.: D06P 1/48, B01F 17/56, B01F 17/00, C08B 37/00, C11D 1/66, D06M 13/207, D06M 15/03

(54) **DISPERGATORKONZENTRAT AUF BASIS VON ABBAUPRODUKTEN VON POLYSACCHARIDEN IN DER TEXTILFÄRBEREI**
CONCENTRATED DISPERSANT BASED ON DECOMPOSITION PRODUCTS OF POLYSACCHARIDES IN TEXTILE DYEING
AGENT DISPERSANT CONCENTRE A BASE DE PRODUITS DE DECOMPOSITION DE POLYSACCHARIDES DANS LA TEINTURE DES TEXTILES

(30) Priorität: 28.09.1993 DE 4332816
(43) Veröffentlichungstag der Anmeldung: 17.07.1996
(73) Patentinhaber: CHEMISCHE FABRIK GRÜNAU GmbH, D-89257 Illertissen (DE)
(72) Erfinder: MAUNZ, Birgit, D-89155 Erbach (DE); HIETSCH, Dieter, D-89257 Illertissen (DE); SCHAD, Jörg, D-89257 Illertissen (DE)
(74) Vertreter: Wacker, Manfred
(86) Internationale Anmeldenummer: EP9403124
(87) Internationale Veröffentlichungsnummer: WO9509265

(56) Entgegenhaltungen:
- FR-A- 2 679 563
- DATABASE WPI Section Ch, Week 8545 Derwent Publications Ltd., London, GB; Class D13, AN 85-280112 & JP,A,60 190 224 (MARUZEN KASEI KK) , 27.September 1985
- 'The Merck Index, tenth edition' 1983 , MERCK & CO., INC , RAHWAY, N. J. , U. S. A. siehe Seite 1161, Absatz 7944
- 'Römpps Chemie-Lexikon, Achte, neubearbeitete und erweiterte Auflage, Band 6, T-Z' 1988 , FRANCKH'SCHE VERLAGSHANDLUNG , STUTTGART, DE siehe Seite 4449, Absatz "Uronsäuren"

## Beschreibung

### Gebiet der Erfindung

Die Erfindung betrifft ein flüssiges, bei Normaltemperatur gegen Austrübung stabiles Dispergatorkonzentrat auf Basis von Abbauprodukten von Polysacchariden, die Uronsäure-Bausteine enthalten und dessen Verwendung.

### Stand der Technik

In der Textilveredlung, z.B. der Vorbehandlung oder der Färberei, werden heutzutage vielfach Dispergiermittel eingesetzt. Beispiele für solche Dispergiermittel sind Ligninsulfonate, Umsetzungsprodukte von Ligninsulfonsäure mit Alkylhalogeniden bzw. Alkylsulfonsäurechloriden, Eiweißfettsäurekondensationsprodukte, Naphthalinsulfonsäure-Formaldehyd-Kondensationsprodukte, Alkylarylsulfonate, Polyvinylalkohole, Polyvinylpyrrolidon, Polyacrylate, glucosehaltige Polyacrylat-Copolymere, Polyphosphate und deren Derivate (vergleiche z. B. Ullmanns Encyklopädie der technischen Chemie, Volume A8, Seiten 586-590).

Die derzeitig vom Fachmann üblicherweise für die Textilveredlung eingesetzten handelsüblichen Dispergiermittel haben jedoch den Nachteil, daß sie entweder auf Basis petrochemischer Rohstoffe aufgebaut sind und/oder eine schlechte biologische Abbaubarkeit bzw. Eliminierbarkeit aufweisen.

Darüber hinaus sind zahlreiche Dispergatoren pulverförmig, was im Vergleich zu flüssigen Produkten nachteilig für die Dosierbarkeit der Produkte ist.

Die JP-A-60-190224 offenbart durch partielle Hydrolyse erhaltene oberflächenaktive Abbauprodukte von Quillaja-Saponin. Eine mögliche Anwendung als oberflächenaktives Mittel in der Textilindustrie wird lediglich allgemein erwähnt. Flüssige Konzentrate werden nicht angesprochen. Die Abbauprodukte enthalten neben monomeren Zuckern auch Glukuronsäure.

Die FR-A-2 679 563 offenbart die Verwendung von Uronsäureestern als Dispergatoren. Die monomeren Verbindungen werden durch Abbau von Pektin und anschließende Ver- bzw. Umesterung in organischen Lösungsmitteln erhalten. Ein wäßriges Konzentrat wird auch in den Anwendungsbeispielen nicht offenbart. Eine Anwendung im Bereich der Textilveredlung wird nicht angeregt.

### Beschreibung der Erfindung

Die Aufgabe der vorliegenden Erfindung bestand darin, umweltverträgliche, flüssige Dispergatorkonzentrate auf Basis nativer Rohstoffe zu entwickeln, die vor allem für die Verwendung in der Textilveredlung geeignet sind. Insbesondere sollten diese Dispergatorkonzentrate die oben geschilderten Nachteile des bekannten Standes der Technik vermeiden. Unter einem Dispergatorkonzentrat wird dabei ein Mittel verstanden, das den Dispergator in wäßrigem Medium in einer Menge von mindestens 20 Gew.-% enthält.

Überraschenderweise wurde nun gefunden, daß die Abbauprodukte von solchen Polysacchariden, die Uronsäure-Bausteine enthalten, die gestellten Anforderungen in jeder Hinsicht ausgezeichnet erfüllen.

Gegenstand der vorliegenden Erfindung ist dementsprechend ein flüssiges, bei Normaltemperatur gegen Austrübung stabiles Dispergatorkonzentrat, das Abbauprodukte von Polysacchariden sowie Wasser enthält, wobei diese Abbauprodukte erhältlich sind durch thermischen, hydrolytischen, oxidativen oder enzymatischen Abbau von solchen Polysacchariden, die Uronsäure-Bausteine enthalten, und wobei
- die Abbauprodukte in einer Menge von 20 bis 50 Gew.-% - bezogen auf das gesamte Konzentrat - enthalten sind und
- die Viskosität des Dispergatorkonzentrats - gemessen bei 20 °C mit einem Brookfield-Viskosimeter (Spindel 1) - 10 bis 500 mPas beträgt.

Unter Normaltemperatur wird im Rahmen der vorliegenden Erfindung ein Temperaturbereich von 10 bis 35 °C verstanden.

Unter Uronsäure-Bausteinen werden im Rahmen der vorliegenden Erfindung einerseits die Uronsäuren selbst verstanden, z.B. D-Glucuronsäure oder D-Galakturonsäure, andererseits auch deren Salze oder Ester, soweit eine entsprechende Modifizierung der freien Carboxylgruppe der Uronsäuren im natürlich vorkommenden Rohstoff vorliegt. So ist beispielsweise bekant, daß die Carboxylgruppe der Glucuronsäure in den Pflanzengummen und Pflanzenschleimen gewöhnlich in der Form ihres Ca- oder Mg-Salzes vorliegt (vergl. z.B. Henseke, G., "Zuckerchemie", Berlin 1966; Seite 136). Als Beispiele für Uronsäure-Bausteine, bei denen die Carboxylgruppe in der Form ihres Esters vorliegt, seien Pektin und Tragant genannt, die als Hauptbausteine u.a. D-Galakturonsäuremethylester enthalten.

Polysaccharide mit Uronsäure-Bausteinen sind natürlich vorkommende Produkte. Sie lassen sich ohne Einschränkungen zur Herstellung der erfindungsgemäß einzusetzenden Abbauprodukte heranziehen. Art und Menge der Uronsäure-Bausteine, die in diesen Polysacchariden enthalten sind, sind dabei an sich nicht kritisch. So enthält z. B. Pektin, das in den Zellwänden und Mittellamellen höherer Landpflanzen vorkommt, die Uronsäure-Bausteine D-Galakturonsäure und D-Galakturonsäuremethylester als Hauptbestandteil. Auch Algin, das in den Zellwänden von Braunalgen vorkommt, enthält die Uronsäure-Bausteine D-Mannuronsäure, L-Guluronsäure sowie die entsprechenden Acetylderivate als Hauptbausteine.

Als Beispiel für ein Polysaccharid, das nicht ausschließlich bzw. weitgehend aus Uronsäure-Bausteinen aufgebaut ist, sei Gummi arabicum (Akaziengummi) genannt. Dieser Gummi ist das getrocknete Pflanzenexsudat, das aus Stamm oder Ästen verschiedener Akazienarten gewonnen wird. Das Exsudat entsteht auch bei natürlichen Verletzungen der Rinde. Zur kommerziellen Gewinnung werden die Bäume angeschnitten und die ausgeschiedenen Tränen nach der Trocknung an der Luft abgeerntet. Gummi arabicum ist aus den Bausteinen L-Arabinose, D-Galaktose, L-Rhamnose und D-Glucoronsäure im Verhältnis von etwa 3:3:1:1 zusammengesetzt. Diese Zusammensetzung variiert jedoch je nach Akazienart, Jahreszeit und Standort.

Von den Polysacchariden mit Uronsäure-Bausteinen sind besonders diejenigen bevorzugt, die ausgewählt sind aus der Gruppe Pektin, Algin, Gummi arabicum, Tragant, Karaya-Gummi, Ghatti-Gummi, Shiraz-Gummi, Xanthan.

In einer besonders bevorzugten Ausführungsform sind diejenigen Polysaccharide mit Uronsäure-Bausteinen bevorzugt, die aus Exsudaten von Pflanzen stammen, davon insbesondere Gummi arabicum, Tragant, Karaya-Gummi, Ghatti-Gummi, Shiraz-Gummi.

Ausdrücklich sei angemerkt, daß Cellulose und Stärke, nicht zu den erfindungsgemäß für den Abbau einzusetzenden Polysaccharide zu rechnen sind, da sie keine Uronsäure-Bausteine enthalten.

Unter Abbauprodukten von Polysacchariden, die Uronsäure-Bausteine enthalten, sind im Rahmen der vorliegenden Erfindung diejenigen Produkte zu verstehen, die durch thermische, hydrolytischen, oxidativen oder enzymatischen Abbau der genannten Polysaccharide zugänglich sind und ein niedrigeres mittleres Molekulargewicht als die zum Abbau eingesetzten Polysaccharide sowie ein höheres mittleres Molekulargewicht als die Monomer-Bausteine, die Produkte eines vollständigen Abbaus, aufweisen.

Die zum Abbau eingesetzten Polysaccharide sind nativen Ursprungs; die Molekulargewichte dieser Polysaccharide sind daher gewissen Schwankungen unterworfen, die von den jeweiligen regionalen und klimatischen Verhältnissen bestimmt werden.

Der Abbau der Polysaccharide wird erfindungsgemäß in wäßrigem Medium derart durchgeführt, daß bei einem Feststoffgehalt im Bereich von 20 bis 50 Gew.-% eine Viskosität im Bereich von 10 bis 500 mPas - gemessen bei 20 °C mit einem Brookfield-Viskosimeter (Spindel 1) - eingestellt wird. Die Viskosität dient mit anderen Worten der funktionalen Umschreibung des Abbaugrades der Polysaccharide.

Die dispergierende Wirkung der erfindungsgemäßen Konzentrate liegt in der gleichen Größenordnung wie die einschlägiger, dem Fachmann aus dem Stand der Technik bekannter, handelsüblicher Konzentrate. Darüber hinaus haben die erfindungsgemäßen Konzentrate den zusätzlichen Vorteil, daß die in ihnen enthaltenen Abbauprodukte von Polysacchariden mit Uronsäure-Bausteinen - im Vergleich zu einschlägig bekannten Dispergiermitteln für die Textilveredlung - gut biologisch abbaubar sind und eine sehr gute Eliminierbarkeit aufweisen.

Die erfindungsgemäßen Konzentrate werden vorzugsweise auf einen pH-Wert im Bereich von 5,0 bis 9,0, insbesondere von 6,5 bis 7,5, eingestellt.

In einer speziellen Ausführungsform der vorliegenden Erfindung wird der Abbau der Polysaccharide mit Uronsäure-Bausteinen in Gegenwart von Säuren durchgeführt. Die so hergestellten Dispergator-Konzentrate haben den zusätzlichen Vorteil einer verbesserten Lagerstabilität. Dies bedeutet, daß die Dispersionen selbst nach mehrmonatiger Lagerung gegen Austrübung stabil sind, d.h. keine Trennungs- bzw. Aufrahmerscheinungen zeigen. Es bedeutet ferner, daß die Konsistenz praktisch unverändert bleibt, d.h. daß die die Viskosität der Konzentrate im Laufe der Lagerung annähernd konstant bleibt.

Die Art der zum Abbau der Polysaccharide herangezogenen Säure ist an sich nicht kritisch. Beispiele für geeignete Säuren sind Halogenwasserstoffsäuren wie HCl, Schwefelsäure, Phosphorsäure, Polyphosphorsäure, Amidosulfonsäuren, Milchsäure, Glykolsäure, Citronensäure, Weinsäure. Für den Abbau besonders bevorzugte Säuren sind Schwefelsäure, Amidosulfonsäure und Citronensäure.

Als repräsentatives Beispiel für die Herstellung der erfindungsgemäßen Dispergatorkonzentrate sei an dieser Stelle der Abbau von Shiraz-Gum mit Citronensäure genannt, dessen Einzelheiten im Beispielteil der vorliegenden Anmeldung beschrieben sind. Der Abbau der erfindungsgemäß geeigneten Polysaccharide ist jedoch nicht an die in dem genannten Beispiel offenbarten speziellen Bedingungen gebunden. So unterliegen Reaktionstemperatur, Reaktionszeit sowie Art und Menge des beim Abbau ggf. verwendeten Reagens (Säure, Base, Oxidationsmittel, Enzym) beim Abbau des Polysaccharids an sich keinen besonderen Einschränkungen. Darüber hinaus kann dieser Abbau kontinuierlich oder diskontinuierlich durchgeführt werden. Typisch ist für die Durchführung des Abbaus, daß man das abzubauende Polysaccharid in wäßrigem Medium in einer Menge von ca. 20 bis 65 Gew.-% vorlegt und den Abbau dann solange durchführt, bis die Reaktionsmischung die gewünschte Viskosität erreicht hat. Danach wird - ggf. nach Einstellung des gewünschten pH-Wertes - filtriert, wobei als Filtrat das erfindungsgemäße flüssige, bei Normaltemperatur gegen Austrübung stabile Dispergatorkonzentrat erhalten wird, das die Abbauprodukte der Polysaccharide in einer Menge von 20 bis 50 Gew.-% - bezogen auf das gesamte Konzentrat - enthält und dessen Viskosität im kritischen Bereich von 10 bis 500 mPas - gemessen bei 20 °C mit einem Brookfield-Viskosimeter (Spindel 1) - liegt.

Wie bereits ausgeführt, sollen die Abbauprodukte von Polysacchariden mit Uronsäure-Bausteinen in den erfindungsgemäßen Konzentraten in einer Menge von 20 bis 50 Gew.-% - bezogen auf das gesamte Konzentrat - enthalten und die Viskosität auf einen Wert im Bereich von 10 bis 500 mPas - gemessen bei 20 °C mit einem Brookfield-Viskosimeter (Spindel 1) - eingestellt sein. Als bevorzugte Bereiche seien in diesem Zusammenhang genannt:
- für den Gehalt des Konzentrates an Abbauprodukt: 30 bis 40 Gew.-%
- für die Viskosität des Konzentrates: 10 bis 100 mPas.

In einer weiteren Ausführungsform der vorliegenden Erfindung enthalten die Dispergatorkonzentrate neben den Abbauprodukten von Polysacchariden mit Uronsäuren-Bausteinen als zusätzliche Bestandteile ein oder mehrere weitere dispergierende Substanzen. Die Menge der zusätzlichen dispergierenden Substanzen soll dabei im Bereich von 0,1 bis 10,0 Gew.-% - bezogen auf das gesamte Konzentrat - liegen. Als besonders wirksam haben sich Kombinationen der oben geschilderten Abbauprodukte von Polysacchariden mit Uronsäure-Bausteinen mit Polyvinylpyrrolidon erwiesen.

Die erfindungsgemäßen Dispergatorkonzentrate lassen sich vorteilhaft als Dispergiermittel in der Textilveredlung verwenden.

Ein weiterer Gegenstand der Erfindung ist die daher die Verwendung eines flüssigen, bei Normaltemperatur gegen Austrübung stabilen Dispergatorkonzentrats, das Abbauprodukte von Polysacchariden, erhältlich durch thermischen, hydrolytischen, oxidativen oder enzymatischen Abbau von solchen Polysacchariden, die Uronsäure-Bausteine enthalten sowie Wasser enthält, wobei diese Abbauprodukte in einer Menge von 20 bis 50 Gew.-% - bezogen auf das gesamte Konzentrat - enthalten sind und die Viskosität des Dispergatorkonzentrats - gemessen bei 20 °C mit einem Brookfield-Viskosimeter (Spindel 1) - 10 bis 500 mPas beträgt, als Dispergiermittel in der Textilveredlung, insbesondere zur Dispergierung von Pigmentschmutz bei der textilen Vorbehandlung sowie der Dispergierung von Farbstoffen beim Färben von Textilien.

Die folgenden Beispiele dienen der Erläuterung der vorliegenden Erfindung und sind nicht einschränkend zu verstehen.

### Beispiele

### 1. Allgemeines

### 1.1. Verwendete Substanzen

**a) Dispergatoren**
   - **D-1:**: handelsübliches Ligninsulfonat; Feststoffgehalt: 30 Gew.-%.
   - **D-2:**: pulverförmiges handelsübliches Naphthalinsulfonsäure-Formaldehyd-Kondensationsprodukt.
   - **D-3:**: flüssiges, wasserfreies handelsübliches Glucosehaltiges Polyacrylat-Copolymer.
**b) Farbstoffe**
   - **Indanthrenblau:**: "Indanthrenblau RS" (Fa. BASF)
   - **Palanilmarineblau:**: "Palanilmarineblau BGF" (Fa. BASF)
**c) Sonstige Stoffe**
   **Hydrosulfit**: Natriumdithionit, Na₂S₂O₄, (Fa. BASF)

### 1.2. Verdünnungen

Bei der Prüfung der dispergierenden Wirkung sind in den untenstehenden Rezepturen Verdünnungen angegeben. Hierfür gilt:
a) Die Angabe "Lösung 1:10" für das Dispergiermittel ist so zu verstehen, daß das kommerziell erhältliche bzw. gemäß Beispiel 1 hergestellte jeweilige Dispergiermittel von der jeweils vorliegenden Konzentration mit Wasser im Verhältnis 1:10 weiter verdünnt wird. Von der dabei erhaltenen Lösung wurden dann für die Rezeptur 2,0 g/l eingesetzt.
b) Die Angabe "Lösung 1:100" für den Farbstoff ist so zu verstehen, daß der kommerzielle erhältliche feste Farbstoff mit Wasser im Verhältnis 1:100 verdünnt wird. Von der dabei erhaltenen Dispersion werden dann für die Rezeptur 0,1 g/l eingesetzt.

### 2. Herstellung und Charakterisierung der Dispergatorkonzentrate

### Beispiel 1

5 kg Wasser wurden in einem Autoklaven vorgelegt und bei Raumtemperatur zunächst 50 g Zitronensäure und anschließend 3,7 kg Shiraz-Gum zugegeben. Die Mischung wurde bei einem Überdruck von 1,5 bar auf 135 °C aufgeheizt und 150 Minuten bei dieser Temperatur behandelt. Nach dem Abkühlen auf Raumtemperatur wurde mit Natronlauge neutralisiert und abschließend über ein Druckfilter filtriert.

Folgende Kennzahlen wurden ermittelt:

| | |
|---|---|
| pH-Wert (100 g Produkt/l H₂0): | 7,0 |
| Trockensubstanzgehalt: | 31,2 Gew.-% |
| Viskosität: | 22 mPas (20 °C, Brookfield-Viskosimeter, Spindel 1) |

### 3. Prüfung der dispergierenden Wirkung

### 3.1. auf den Farbstoff Indanthrenblau

- Rezeptur:: 2,0 g/l Dispergiermittel (Lösung 1:10)
0,1 g/l Indanthrenblau RS (Lösung 1:100)
10,0 ml/l Natronlauge 38 °Bé
2,0 g/l Hydrosulfit

### Ablauf:

800 ml Wasser (8° dH) wurden in einem Becherglas vorgelegt und die o.g. Rezepturbestandteile in der beschriebenen Reihenfolge zugegeben. Die Flotte wurde gut durchgemischt und auf einer Kochplatte auf 55 °C erwärmt. Nach einer Behandlungszeit von 20 Minuten erfolgte der Zusatz von 2,0 ml/l Wasserstoffperoxid (50 %ig). Nach weiteren 5 Minuten wurden 12 ml/l Essigsäure (60 %ig) zugesetzt. Die Behandlungszeit erstreckte sich nochmals über einen Zeitraum von 5 Minuten, bevor die Flotte über eine mit einem Papierfilter versehene Filternutsche, die mit einer Wasserstrahlpumpe verbunden war, abgesaugt wurde.

### Bewertung:

Das Aussehen des Papierfilters wurde von einem geschulten Versuchspanel von 3 Personen, die über Erfahrungen auf dem Gebiet der textilen Dispergatoren sowie entsprechender anwendungstechnischer Beurteilung verfügten, bewertet. Bei dieser Bewertung wurde eine Skala von 1 (schlecht) bis 6 (sehr gut) zugrundegelegt.

Die Extrempunkte der Skala können dabei wie folgt beschrieben werden: Sofern der Filter nur leicht blau angefärbt ist und die unterhalb des Filters befindlichen Löcher der Filternutsche nur schwach durchschimmern, wird die Note 6 vergeben. Sofern der Filter mit einem Farblack überzogen ist und die unterhalb des Filters befindlichen Löcher der Nutsche deutlich und mit grober Struktur zu erkennen sind, wird die Note 1 vergeben. Die Note 6 drückt somit ein hervorragendes Dispergiervermögen aus (auf dem Filter verbleibt wenig Farbstoff), die Note 1 drückt ein schlechtes Dispergiervermögen aus (auf dem Filter verbleiben sehr viele Farbstoffpartikel).

Je nach Dispergiermittel wurden folgende Ergebnisse erhalten:

| Dispergiermittel | Bewertung |
|---|---|
| Abbauprodukt von Shiraz-Gum (gemäß Beispiel 1) | 4 |
| D-1 | 3-4 |
| D-2 | 3-4 |
| D-3 | 1-2 |

### 3.2. auf den Farbstoff Palanilmarineblau

- Rezeptur:: 2,0 g/l Dispergiermittel (Lösung 1:10)
0,1 g/l Palanilmarineblau (Lösung 1:100)
2,0 ml/l Essigsäure 60 %ig

### Ablauf:

In 400 ml Wasser (8° dH) wurden die o.g. Rezepturbestandteile in der beschriebenen Reihenfolge zugegeben. Die gesamte Flotte wurde in einen Edelstahlbecher, passend für den Laborfärbeapparat "Labomat" (Werner Mathis AG, Zürich), gegeben. Im Labomat wurde diese Flotte mit 2 °C/min auf 125 °C aufgeheizt und dort für eine Stunde bei dieser Temperatur gehalten. Nach dem Abkühlen auf 60 °C wurde über eine Filternutsche wie unter Nr. 3.1. beschrieben abgesaugt.

### Bewertung:

Die Bewertung erfolgte wie unter Nr. 3.1. beschrieben.

Je nach Dispergiermittel wurden folgende Ergebnisse erhalten:

| Dispergiermittel | Bewertung |
|---|---|
| Abbauprodukt von Shiraz-Gum (gemäß Beispiel 1) | 5 |
| D-1 | 5 |
| D-2 | 5 |
| D-3 | 1-2 |

## Patentansprüche

1. Flüssiges, bei Normaltemperatur gegen Austrübung stabiles Dispergatorkonzentrat, **dadurch gekennzeichnet**, daß es enthält
a) Abbauprodukte von Polysacchariden, erhältlich durch thermischen, hydrolytischen, oxidativen oder enzymatischen Abbau von solchen Polysacchariden, die Uronsäure-Bausteine enthalten,
b) Wasser,
wobei
- die Abbauprodukte a) in einer Menge von 20 bis 50 Gew.-% - bezogen auf das gesamte Konzentrat - enthalten sind und
- die Viskosität des Dispergatorkonzentrats - gemessen bei 20 °C mit einem Brookfield-Viskosimeter (Spindel 1) - 10 bis 500 mPas beträgt.

2. Konzentrat nach Anspruch 1, wobei Abbauprodukte aus solchen Polysacchariden mit Uronsäure-Bausteinen enthalten sind, die ausgewählt sind aus der Gruppe Pektin, Algin, Gummi arabicum, Tragant, Karaya-Gummi, Ghatti-Gummi, Shiraz-Gummi, Xanthan.

3. Konzentrat nach Anspruch 1 oder 2, wobei Abbauprodukte aus solchen Polysacchariden mit Uronsäure-Bausteinen enthalten sind, die aus Exsudaten von Pflanzen stammen.

4. Konzentrat nach Anspruch 3, wobei Abbauprodukte aus solchen Polysacchariden mit Uronsäure-Bausteinen enthalten sind, die ausgewählt sind aus der Gruppe Gummi arabicum, Tragant, Karaya-Gummi, Ghatti-Gummi, Shiraz-Gummi.

5. Konzentrat nach einem der Ansprüche 1 bis 4, wobei der pH-Wert des Konzentrates im Bereich von 5,0 bis 9,0 liegt.

6. Konzentrat nach einem der Ansprüche 1 bis 4, wobei mindestens eine weitere dispergierende Substanz in einer Menge von 0,1 bis 10 Gew.-% - bezogen auf das gesamte Konzentrat - enthalten ist.

7. Konzentrat nach Anspruch 6, wobei die zusätzliche dispergierende Substanz Polyvinylpyrrolidon ist.

8. Verwendung eines flüssigen, bei Normaltemperatur gegen Austrübung stabilen Dispergatorkonzentrats, enthaltend
a) Abbauprodukte von Polysacchariden, erhältlich durch thermischen, hydrolytischen, oxidativen oder enzymatischen Abbau von solchen Polysacchariden, die Uronsäure-Bausteine enthalten,
b) Wasser,
wobei
- die Abbauprodukte a) in einer Menge von 20 bis 50 Gew.-% - bezogen auf das gesamte Konzentrat - enthalten sind und
- die Viskosität des Dispergatorkonzentrats - gemessen bei 20 °C mit einem Brookfield-Viskosimeter (Spindel 1) - 10 bis 500 mPas beträgt,
als Dispergiermittel in der Textilveredlung.

9. Verwendung nach Anspruch 8, wobei der pH-Wert des Konzentrates im Bereich von 5,0 bis 9,0 liegt.

10. Verwendung nach Anspruch 8 oder 9 zur Dispergierung von Pigmentschmutz bei der textilen Vorbehandlung.

11. Verwendung nach Anspruch 8 oder 9 zur Dispergierung von Farbstoffen beim Färben von Textilien.

## Claims

1. A liquid dispersant concentrate stable against clouding at normal temperature, characterized in that it contains
a) degradation products of polysaccharides obtainable by thermal, hydrolytic, oxidative or enzymatic degradation of polysaccharides containing uronic acid units and
b) water,
- the degradation products a) being present in a quantity of 20 to 50% by weight, based on the concentrate as a whole, and
- the viscosity of the dispersant concentrate, as measured at 20°C with a Brookfield viscosimeter (spindle 1), being in the range from 10 to 500 mPa·s.

2. A concentrate as claimed in claim 1, characterized in that degradation products of polysaccharides containing uronic acid units selected from the group consisting of pectin, algin, gum arabic, tragacanth, karaya gum, ghatti gum, shiraz gum and xanthan are present.

3. A concentrate as claimed in claim 1 or 2, characterized in that degradation products of polysaccharides containing uronic acid units which emanate from exudates of plants are present.

4. A concentrate as claimed in claim 3, characterized in that degradation products of polysaccharides containing uronic acid units selected from the group consisting of gum arabic, tragacanth, karaya gum, ghatti gum and shiraz gum are present.

5. A concentrate as claimed in any of claims 1 to 4, characterized in that the pH value of the concentrate is in the range from 5.0 to 9.0.

6. A concentrate as claimed in any of claims 1 to 4, characterized in that at least one other dispersing substance is present in a quantity of 0.1 to 10% by weight, based on the concentrate as a whole.

7. A concentrate as claimed in claim 6, characterized in that the additional dispersing substance is polyvinyl pyrrolidone.

8. The use of a liquid dispersant concentrate stable against clouding at normal temperature and containing
a) degradation products of polysaccharides obtainable by thermal, hydrolytic, oxidative or enzymatic degradation of polysaccharides containing uronic acid units and
b) water,
- the degradation products a) being present in a quantity of 20 to 50% by weight, based on the concentrate as a whole, and
- the viscosity of the dispersant concentrate, as measured at 20°C with a Brookfield viscosimeter (spindle 1), being in the range from 10 to 500 mPa·s,
as dispersants in the finishing of textiles.

9. The use claimed in claim 8, characterized in that the pH value of the concentrate is in the range from 5.0 to 9.0.

10. The use claimed in claim 8 or 9 for dispersing pigment soil in the pretreatment of textiles.

11. The use claimed in claim 8 or 9 for dispersing dyes in the dyeing of textiles.

## Revendications

1. Concentré d'agent dispersant liquide à température normale stable contre le trouble,
caractérisé en ce qu'
il contient :
a) des produits de décomposition de polysaccharides, obtenus par dégradation thermique, hydrolytique, par voie d'oxydation ou enzymatique de ces polysaccharides, qui contiennent des éléments d'acide uronique,
b) de l'eau
dans lequel
- les produits de décomposition a) sont contenus dans une quantité de 20 à 50 % en poids -par rapport au concentré total- et
- la viscosité du concentré d'agent dispersant -mesuré à 20°C avec un viscosimètre de Brookfield (broche 1)- se monte à 10 jusqu'à 500 mPas.

2. Concentré selon la revendication 1,
dans lequel
les produits de décomposition de ces polysaccharides sont contenus avec des éléments de l'acide uronique, qui sont choisis dans le groupe pectine, algine, gomme arabique, gomme adragante, gomme de sterculia, gomme de ghatti, gomme de shiraz, xanthane.

3. Concentré selon les revendications 1 ou 2,
dans lequel
les produits de décomposition de ces polysaccharides sont contenus avec des éléments de l'acide uronique, qui proviennent d'exsudats de plantes.

4. Concentrat selon la revendication 3,
dans lequel
les produits de décomposition des ces polysaccharides sont contenus avec de l'acide uronique, qui sont choisis dans le groupe gomme arabique, gomme adragante, gomme de sterculia, gomme de ghatti, gomme de shiraz.

5. Concentré selon une des revendications 1 à 4
dans lequel
le pH du concentré se situe dans la zone de 5,0 à 9,0.

6. Concentré selon une des revendication 1 à 4,
dans lequel
au moins une autre substance dispersante est contenue en une quantité de 0,1 à 10 % en poids -par rapport à tout le concentré.

7. Concentré selon le revendication 6,
dans lequel
la substance supplémentaire dispersante est de la pyrrolidone polyvinylique.

8. Utilisation d'un concentré d'agent dispersant liquide, stable à température normale contre le trouble, contenant :
a) des produits de décomposition de polysaccharides, obtenues par dégradation thermique, hydrolytique, par voie d'oxydation ou enzymatique de ces polysaccharides, qui contiennent des éléments de l'acide uronique
b) de l'eau
tandis que
- les produits de décomposition a) sont contenus en une quantité de 20 à 50 % en poids -par rapport au concentré total- et
- la viscosité du concentré d'agent dispersant -mesuré à 20°C avec un viscosimètre de Brookfield (broche 1) se monte à 10 jusqu'à 500 mPas
comme agent dispersant dans le traitement des textiles.

9. Utilisation selon la revendication 8,
dans laquelle
le pH du concentré se situe dans la zone de 5,0 à 9,0.

10. Utilisation selon les revendications 8 ou 9 pour la dispersion de déchets de pigment lors du traitement des textiles.

11. Utilisation selon les revendications 8 ou 9 pour la dispersion de colorants lors de la teinture de textiles.
